# EUROPÄISCHE PATENTSCHRIFT

(11) **EP 3 628 439 B1**
(45) Veröffentlichungstag und Bekanntmachung des Hinweises auf die Patenterteilung: **19.01.2022**
(21) Anmeldenummer: 18201861.4
(22) Anmeldetag: 22.10.2018
(51) Int. Cl.: B23Q 1/54, B25J 9/00, B23Q 1/28, B23Q 17/22

(54) **WERKZEUGMASCHINE**
MACHINE TOOL
MACHINE-OUTIL

(30) Priorität: 28.09.2018 DE 102018124113
(43) Veröffentlichungstag der Anmeldung: 01.04.2020
(73) Patentinhaber: Picum MT GmbH, 30419 Hannover (DE)
(72) Erfinder: BROUWER, Dominik, 30938 Burgwedel (DE)
(74) Vertreter: Gramm, Lins & Partner Patent- und Rechtsanwälte PartGmbB

(56) Entgegenhaltungen:
- EP-A1- 0 868 255
- EP-A1- 1 790 440
- DE-B3-102013 224 174
- US-A1- 2005 135 914

## Beschreibung

Die Erfindung betrifft eine Werkzeugmaschine gemäß dem Oberbegriff von Anspruch 1.

Eine derartige Maschine ist beispielsweise aus der DE 10 2013 224 174 B3 bekannt und dient dazu, ein Werkstück zu bearbeiten oder zu vermessen, das größer ist als der Bearbeitungsbereich der Achseneinheit. Die aus der Druckschrift bekannte Maschine ist dazu ausgebildet, ihre Position relativ zum Werkstück zu verändern, dann am Werkstück befestigt zu werden und danach das Werkstück zu bearbeiten. Damit bei dieser Bearbeitung eine hinreichend hohe Genauigkeit eingehalten werden kann, ist ein Messsystem vorhanden, mittels dem die Position der eigentlichen Bearbeitungseinheit vor dem Beginn der Bearbeitung relativ zum Werkstück eingemessen wird. Nachteilig an einer derartigen Maschine ist, dass sie nur eine vergleichsweise kleine Steifigkeit aufweist, so dass nur vergleichsweise geringe Prozesskräfte toleriert werden können. Das führt zu vergleichsweise langen Bearbeitungszeiten.

Aus der WO 97 /22 436 ist eine Werkzeugmaschine bekannt, die einen Hexapodantrieb hat. Der Hexapodantrieb besitzt sechs Beine, die jeweils an einem Schlitten befestigt sind. Die Schlitten an geraden Schienen geführt. Zur Feinjustage der Ausrichtung des Endeffektors, der mittels der Beine bewegt wird, ist für eine Justiervorrichtung vorgesehen. Der Nachteil an einer derartigen Maschine ist der vergleichsweise kleine Bearbeitungsraum.

Aus der EP 1 790 440 A1 ist eine Werkzeugmaschine mit einer Parallelkinematik bekannt, bei der der Antrieb überbestimmt ausgebildet sein kann. Auf diese Art und Weise kann die Kalibrierung der Werkzeugmaschine besonders einfach durchgeführt werden. Nachteilig an dieser Werkzeugmaschine ist ebenfalls der vergleichsweise geringe Bauraum.

Aus der US 2005/0135914 A1 ist eine Werkzeugmaschine mit einer Parallelkinematik bekannt, bei der der Antrieb überbestimmt ausgebildet sein kann. Dadurch werden Inhomogenitäten in der Steifigkeit und bei den dynamischen Eigenschaften vermindert. Wie bei den beiden vorgenannten Werkzeugmaschinen hat auch diese Werkzeugmaschine den Nachteil eines vergleichsweise geringen Bearbeitungsraums und einer geringen Ortsmobilität.

Der Erfindung liegt die Aufgabe zu Grunde, eine Werkzeugmaschine vorzuschlagen, die mobil einsetzbar ist und dennoch eine hohe Steifigkeit hat.

Die Erfindung löst das Problem durch eine Werkzeugmaschine mit den Merkmalen von Anspruch 1.

Vorteilhaft an einer solchen Werkzeugmaschine ist, dass der Multipod-Antrieb aufgrund seiner mechanischen Überbestimmung in einen verspannten Zustand gebracht werden kann, in dem die Kräfte, die an den Stützelementen und den Antriebselemente anliegen, größer sind als in einem unverspannten Zustand. In anderen Worten kann das Werkzeugkopfgestell zunächst mittels der Bewegungseinrichtung an eine vorgegebene Position bewegt werden. Der Multipod-Antrieb ist dabei im unverspannten Zustand. Danach wird der Multipod-Antrieb in seinen verspannten Zustand gebracht, sodass die Kräfte, die an zumindest einem Stützelement und/oder zumindest einem Antriebselement anliegen, größer werden. Eine gemäß einer bevorzugten Ausführungsform vorhandene Steuerung ist vorzugsweise ausgebildet zum automatischen Durchführen eines solchen Verfahrens.

Im verspannten Zustand hat der Multipod-Antrieb eine höhere Steifigkeit als im unverspannten Zustand. Vorzugsweise beträgt die Steifigkeit im verspannten Zustand zumindest das 1,5-fache, vorzugsweise zumindest das Doppelte einer Steifigkeit im unverspannten Zustand. Die Steifigkeit wird insbesondere durch die Federkonstante für eine kleine, insbesondere infinitessimal kleine, Auslenkung des Werkzeugkopfs relativ zum Maschinenrahmen beschrieben. Diese Federkonstante ist meist von der Richtung abhängig, in der die Kraft angreift. Die Steifigkeit ist insbesondere die kleinste aller Federkonstanten der unterschiedlichen Kraftrichtungen.

Im Rahmen der vorliegenden Beschreibung wird unter dem Werkzeugkopfgestell dasjenige Bauteil der Werkzeugmaschine verstanden, das mittels der Bewegungseinrichtung bewegbar ist und relativ zu dem die Achseneinheit befestigt ist.

Die Achseneinheit ist eine Vorrichtung, mittels der der Werkzeugkopf relativ zum Werkzeugkopfgestell auf eine vorgebbare Position gebracht und gemäß einer vorgegebenen Trajektorie bewegt werden kann. Die Achseneinheit ist am Werkzeugkopfgestell befestigt und der Werkzeugkopf ist an der Achseneinheit befestigt. Wird nur die Achseneinheit betätigt, so wird vorzugsweise der Werkzeugkopf bewegt, nicht aber das Werkzeugkopfgestell. Die Achseneinheit umfasst vorzugsweise drei, vier, fünf oder mehr Antriebsachsen zum Positionieren des Werkzeugkopfs. Fünf Antriebsachsen haben sich als besonders gut herausgestellt.

Jede Antriebsachse, die auch Maschinenachse genannt werden könnte, umfasst eine Positionsermittlungsvorrichtung, mittels der die Stellung der jeweiligen Antriebsachse bestimmbar ist. Derartige Achseneinheiten sind aus dem Stand der Technik gut bekannt und werden daher nicht weiter erläutert.

Unter dem Werkzeugkopf wird insbesondere derjenige Teil der Werkzeugmaschine verstanden, der entweder zum Aufnehmen eines Werkzeugs oder zum Einwirken auf das Werkstück ausgebildet ist. Beispielsweise kann der Werkzeugkopf eine Spindel aufweisen, an der ein spanendes Werkzeug, beispielsweise ein Fräser, ein Schleifer, ein Läpper oder ein Polierer befestigt ist. Der Werkzeugkopf kann zudem einen Schweißkopf zum Schweißen, insbesondere zum Auftragsschweißen, einen Auftragkopf zum Auftragen von Material auf das Werkstück, einen Härtekopf zum Härten einer Randzone des Werkstücks, einen Tastkopf zum Antasten des Werkstücks, insbesondere um dessen Abmessung zu bestimmen, und/oder einen Finisher aufweisen. Unter einem Finisher wird ein Werkzeug verstanden, dass die Randzoneneigenschaften des Werkstücks verändert und/oder die Randzone mechanisch umformt. Beispielsweise handelt es sich bei dem Finisher um ein Klopfwerkzeug, Rollierwerkzeug oder ein Hammerwerkzeug.

Unter dem Merkmal, dass der Multipod-Antrieb im Kraftfluss zwischen dem Maschinenrahmen und dem Werkzeugkopfgestell angeordnet ist, wird insbesondere verstanden, dass der Multipod-Antrieb ausgebildet ist zum Aufbringen einer Kraft zwischen Maschinenrahmen und Werkzeugkopfgestell, sodass das Werkzeugkopfgestell relativ zum Maschinenrahmen bewegbar ist. Insbesondere ist der Multipod-Antrieb ausgebildet zum Positionieren des Werkzeugkopfgestells auf eine vorgegebene Position.

Unter dem Maschinenrahmen wird derjenige Bestandteil der Werkzeugmaschine verstanden, der relativ zum Werkstück fixiert ist. Insbesondere steht der Werkzeugrahmen auf dem Boden, wobei das Werkstück am Maschinenrahmen befestigt ist. Alternativ ist der Maschinenrahmen am Werkstück befestigt. Letzteres ist besonders günstig, wenn es sich um ein Gesenk handelt.

Unter dem Merkmal, dass der Multipod-Antrieb zumindest drei Antriebselemente aufweist, wird insbesondere verstanden, dass der Multipod-Antrieb drei, vier, fünf oder sechs Antriebselemente aufweist. Mehr als sechs Antriebselemente sind möglich und von der Erfindung umfasst, oft aber nicht vorteilhaft. Besonders günstig sind genau vier Antriebselemente.

Wenn die Stützelemente im arretierten Zustand sind, schränkt das die Bewegungsfreiheit des Werkzeugkopfs relativ zum Maschinenrahmen ein. Besonders bevorzugt sind die Stützelemente so ausgebildet, dass eine Bewegung des Werkzeugkopfgestells relativ zum Maschinenrahmen komplett blockiert wird, wenn die Stützelemente im arretierten Zustand sind.

Es sei darauf hingewiesen, dass die Stützelemente auch angetrieben sein können, sodass ein Stützelement auch Antriebselement sein kann. In diesem Fall besitzt der Multipod-Antrieb zumindest fünf Antriebselemente. Bevorzugt, da konstruktiv einfacher, ist aber, dass die Stützelemente nicht angetrieben sind.

Unter dem Merkmal, dass der Multipod-Antrieb durch die Stützelemente und die Antriebselemente mechanisch überbestimmt ist, wird verstanden, dass er statisch überbestimmt ist. Die Begriffe statische Bestimmtheit und mechanische Bestimmtheit werden synonym verwendet. Wenn der Multipod-Antrieb mechanisch überbestimmt ist, bedeutet dies insbesondere, dass eine Trajektorie für das Werkzeugkopfgestell existiert, sodass das Betätigen der Antriebselemente, um das Werkzeugkopfgestell auf diese Trajektorie zu bewegen, zwangsläuft zu einer Bewegung zumindest eines der Stützelemente, insbesondere aller Stützelemente, führt.

Der Multipod-Antrieb ist durch die Stützelemente und die Antriebselemente zumindest zweifach mechanisch überbestimmt. Wenn die Stützelemente gleichzeitig Antriebselemente sind, ist der Multipod-Antrieb entsprechend durch die Antriebselemente zumindest zweifach mechanisch überbestimmt. Unter dem Merkmal, dass der Multipod-Antrieb zweifach mechanisch überstimmt ist, wird insbesondere verstanden, dass zwei der Stütze- und/oder Antriebselemente entfernt werden müssen, bevor der Multipod-Antrieb mechanisch bestimmt ist.

Besonders günstig ist es, wenn der Multipod-Antrieb dreifach, vierfach, fünffach oder sechsfach mechanisch überbestimmt ist. Als besonders günstig hat sich eine vierfache mechanische Überbestimmung herausgestellt. In anderen Worten müssen dann vier Stütz- und/oder Antriebselemente entfernt werden, bis der Multipod-Antrieb mechanisch bestimmt ist.

Besonders günstig ist es, wenn der Multipod-Antrieb zum Bewegen das Werkzeugkopfgestell in drei, vier oder fünf Freiheitsgraden ausgebildet ist. Als besonders günstig haben sich drei oder vier Freiheitsgrade herausgestellt. Vorzugsweise ist der Multipod-Antrieb zum Bewegen des Werkzeugkopfgestells in zumindest den drei Raumkoordinaten ausgebildet. Es ist dann vorzugsweise möglich, die Winkelstellung des Werkzeugkopfs mittels der Achseneinheit einzustellen.

Ist der Multipod-Antrieb zum Bewegen des Werkzeugkopfgestells in vier oder fünf Freiheitsgraden ausgebildet, so sind dies vorzugsweise die drei Raumkoordinaten plus zusätzlich einer oder zwei Winkelkoordinaten.

Besonders günstig ist, wenn die Achseneinheit fünf Antriebsachsen aufweist und der Multipod-Antrieb zum Bewegen des Werkzeugkopfgestells in drei oder vier Freiheitsgraden ausgebildet ist.

Vorzugsweise weist der Multipod-Antrieb zumindest vier, insbesondere genau vier, Stützelemente auf, wobei das Werkzeugkopfgestell relativ zum Maschinenrahmen unbeweglich ist, wenn die Stützelemente jeweils im arretierten Zustand sind. Auf diese Weise wird eine besonders hohe Steifigkeit in Bezug auf eine Bewegung des Werkzeugkopfs relativ zum Maschinenrahmen erreicht, wenn die Stützelemente im arretierten Zustand sind.

Günstig ist es, wenn die Antriebselemente jeweils einen Antriebselement-Antrieb zum Bewegen der Antriebselemente aufweisen. Wie oben bereits ausgeführt, ist es zudem möglich, dass die Stützelemente einen Stützelemente-Antrieb zum Bewegen der Stützelemente aufweisen, das ist aber nicht notwendig. Dieser ist vorzugsweise nicht selbsthemmend, sodass sich die Stützelemente frei bewegen können, wenn die Antriebselemente bewegt werden. Konstruktiv besonders einfach ist es jedoch, wenn die Stützelemente keinen eigenen Antrieb aufweisen und nur eine Stützelement-Arretiervorrichtung haben. In diesem Fall können die Stützelemente sich in zumindest einem, vorzugsweise in genau einem Freiheitsgrad bewegen, sodass Zwangskräfte auf die Stützelement nur dann auftreten, wenn sie arretiert sind, wenn in anderen Worten die Stützelement-Arretiervorrichtung in ihrer Arretierungsstellung ist.

Der Antriebselement-Antrieb ist vorzugsweise ein Linearantrieb, insbesondere ein Kugelgewindetrieb. Mittels des Antriebselement-Antriebs lässt sich vorzugsweise eine Position eines Fußpunkts des jeweiligen Antriebselements motorisch verändern. Alternativ oder zusätzlich lässt sich mittels des Antriebselement-Antriebs eine Länge des Antriebselements motorisch verändern.

Bevorzugt ist eine Werkzeugmaschine, bei der (a) der die Bewegungsvorrichtung eine erste Schiene, einen ersten Schlitten, der an der ersten Schiene linear geführt ist, und zumindest einen zweiten Schlitten, der an der ersten Schiene linear geführt ist, aufweist, wobei (b) ein erster Antriebselement-Fußpunkt des ersten Antriebselements am ersten Schlitten befestigt ist, wobei (c) ein zweiter Antriebselement-Fußpunkt des zweiten Antriebselements am zweiten Schlitten befestigt ist, wobei (d) der erste Antriebselement-Antrieb zum Bewegen des ersten Schlittens entlang der ersten Schiene ausgebildet ist und wobei (e) der zweite Antriebselement-Antrieb zum Bewegen des zweiten Schlittens entlang der ersten Schiene ausgebildet ist.

Die erste Schiene ist zudem Teil des Maschinenrahmens. Durch eine solche Bewegungsvorrichtung kann das Werkzeugkopfgestell auf einfache Weise in zumindest drei Freiheitsgraden, nämlich den drei Raumpositionen, positioniert werden. Zudem ist eine solche Bewegungsvorrichtung robust und einfach in der Herstellung.

Vorzugsweise besitzt der Multipod-Antrieb eine zweite Schiene und einen dritten Schlitten, der an der zweiten Schiene, insbesondere linear, geführt ist, sowie einen vierten Schlitten, der an der zweiten Schiene, insbesondere linear, geführt ist. Vorzugsweise ist ein dritter Antriebselement-Fußpunkt des dritten Antriebselements am dritten Schlitten befestigt und ein vierter Antriebselement-Fußpunkt des vierten Antriebselements am vierten Schlitten befestigt.

Ein dritter Antriebselement-Antrieb ist zum Bewegen des dritten Schlittens entlang der zweiten Schiene ausgebildet und ein vierter Antriebselement-Antrieb zum Bewegen des vierten Schlittens entlang der zweiten Schiene. Allgemein verlaufen vorzugsweise jeweils zwei Schlitten an jeweils einer von zwei Schienen.

Gemäß einer bevorzugten Ausführungsform besitzt die Bewegungseinrichtung, insbesondere der Multipod-Antrieb, einen ersten Hilfs-Schlitten, der an dem ersten Schlitten linear geführt ist. Dazu kann am ersten Schlitten eine erste Hilfs-Schiene ausgebildet sein. Ein erster Stützelement-Fußpunkt des ersten Stützelements ist an dem ersten Hilfs-Schlitten befestigt.

Besonders günstig ist es, wenn die Bewegungseinrichtung, insbesondere der Multipod-Antrieb, einen zweiten Hilfs-Schlitten, der an dem zweiten Schlitten linear geführt ist, aufweist. Dazu kann am zweiten Schlitten eine zweite Hilfs-Schiene ausgebildet sein. Ein zweiter Stützelement-Fußpunkt des zweiten Stützelements ist am zweiten Hilfs-Schlitten befestigt.

Günstig ist es zudem, wenn die Bewegungseinrichtung, insbesondere der Multipod-Antrieb, eine dritte Hilfs-Schiene, die an dem dritten Schlitten linear geführt ist aufweist. In diesem Fall ist ein dritter Stützelement-Fußpunkt des dritten Stützelements am dritten Hilfs-Schlitten befestigt. Die dritte Hilfs-Schiene ist selbstverständlich nur vorhanden, wenn drei oder mehr Stützelemente vorhanden sind. Ist ein viertes Stützelement vorhanden, umfasst die Bewegungseinrichtung, insbesondere der Multipod-Antrieb, vorzugsweise eine vierte Hilfs-Schiene, die am vierten Schlitten linear geführt ist, und einen vierten Hilfs-Schlitten, der an der vierten Hilfs-Schiene geführt ist, wobei ein vierter Stützelement-Fußpunkt des vierten Stützelements am vierten Hilfs-Schlitten linear geführt ist.

Günstig ist es, wenn die Stützelement-Arretiervorrichtung eingerichtet ist zum Festlegen der Hilfs-Schlitten relativ zu dem jeweiligen Schlitten, an dem der Hilfs-Schlitten linear geführt ist. Besitzt der Multipod-Antrieb Stützelement-Antriebe, so sind diese jeweils ausgebildet zum Bewegen der Hilfs-Schiene relativ zu dem Schlitten, an dem sie linear geführt sind.

Gemäß einer bevorzugten Ausführungsform besitzt die Werkzeugmaschine eine Steuerung, die ausgebildet ist zum automatischen Durchführen eines Verfahrens mit den folgenden Schritten: (i) Ansteuern der Antriebselement-Antriebe, sodass sich der Werkzeugkopf entlang einer vorgegebenen Minderpräzisions-Trajektorie bewegt und (ii) Ansteuern des Werkzeugkopfs oder eines ersten Werkzeugs, das am Werkzeugkopf befestigt ist, sodass es ein Werkstück bearbeitet, wobei die Achseneinheit vorzugswiese nicht bewegt wird, (iii) danach Ansteuern der Arretiervorrichtungen, sodass diese die Antriebselemente und die Stützelemente arretieren, (iv) Ansteuern der Achseneinheit, sodass der Werkzeugkopf oder das erste Werkzeug oder ein zweites Werkzeug, das am Werkzeugkopf befestigt ist, entlang einer vorgegebenen Hochpräzisions-Trajektorie bewegt wird.

Eine Steifigkeit bezüglich einer Bewegung des Werkzeugkopfs relativ zum Maschinenrahmen ist bei einer Bewegung entlang der Hochpräzisions-Trajektorie höher als bei Bewegung entlang der Minderpräzisions-Trajektorie. Die Bewegung mittels des Multipod-Antriebs ist daher gut geeignet für Bewegung des Werkzeugkopfs, die keine erhöhte Anforderung an die Genauigkeit stellt. In der Regel ist eine Bewegung mittels des Multipod-Antriebs schneller, sodass Bearbeitungszeit eingespart werden kann.

Um die Steifigkeit weiter zu erhöhen ist gemäß einer bevorzugten Ausführungsform vorgesehen, dass die Steuerung zum automatischen Durchführen eines Verfahrens mit dem Schritt: nach dem Ansteuern der Arretiervorrichtungen, sodass diese die Antriebselemente und die Stützelemente arretieren, Ansteuern zumindest eines Teils der, insbesondere aller, Antriebselement-Antriebe, sodass sich die Antriebselemente gegen die Stützelemente verspannen. Der Grund dafür, dass dieses Vorgehen die Steifigkeit erhöht, ist, dass die Steifigkeit eines Systems in der Regel mit zunehmender Auslenkung zunimmt.

Gemäß einer bevorzugten Ausführungsform besitzt die Werkzeugmaschine (a) eine Messvorrichtung, die ausgebildet ist zum automatischen Aufspannen eines metrologischen Rahmens und mittels der die Position des Werkzeugkopfs relativ zur Messvorrichtung bestimmbar ist, (b) wobei die Steuerung eingerichtet ist zum automatischen Durchführen eines Verfahrens mit den Schritten: (i) nach Schritt (iii) des Ansteuerns der Arretiervorrichtungen, sodass diese die Antriebselemente und die Stützelemente arretieren, Messen einer Position des Maschinenrahmens relativ zur Messvorrichtung, (ii) Errechnen der Hochpräzisions-Trajektorie im Maschinen-Koordinatensystem des Werkzeugkopfgestells aus einer vorgegebenen Ziel-Trajektorie in Messrahmen-Koordinaten der Messvorrichtung und (iii) Bewegen des Werkzeugkopfs oder des Werkzeugs entlang der Hochpräzisions-Trajektorie mittels der Achseneinheit, so dass das Werkstück bearbeitet wird.

Vorzugsweise umfasst die Messvorrichtung einen Lasertracker. Ein Lasertracker könnte auch als Tracking-Interferometer bezeichnet werden und ist ein Messgerät, das 3D-Koordinaten von Objektpunkten erfassen kann. Ein derartiger Lasertracker umfasst zumindest ein Interferometer und peilt mit zumindest einem Laserstrahl einen Retroreflektor an, dessen Position so hochgenau bestimmt werden kann. Vorzugsweise ist die Messvorrichtung relativ zum Maschinenrahmen fixiert.

Alternativ kann es sich bei der Messvorrichtung auch um eine Kontur-Erfassungsvorrichtung handeln, mittels der eine Kontur des Werkstücks gemessen werden kann.

Das ist beispielsweise dann vorteilhaft, wenn es sich bei dem Werkstück um ein Gesenk handelt. Mittels der Messvorrichtung wird dann die Kontur des Gesenks erfasst und aus den so erhaltenen Konturdaten die Werkzeug-Trajektorie errechnet, die das Werkzeug nehmen muss, um das Gesenk in die gewünschte Form zu bringen. Selbstverständlich kann eine derartige Messvorrichtung auch für andere Werkstücke außer Gesenken eingesetzt werden.

Im Folgenden wird die Erfindung anhand der beigefügten Zeichnungen erläutert. Dabei zeigt
- Figur 1: eine erfindungsgemäße Werkzeugmaschine, bei der der Multipod-Antrieb in einer ersten Stellung ist und
- Figur 2: die Werkzeugmaschine gemäß Figur 1, bei der der Multipod-Antrieb in einer zweiten Stellung ist.
- Figur 3: zeigt eine Ausführungsform einer Stützelement-Arretiervorrichtung und einer Antriebselement-Arretiervorrichtung des Multiod-Antriebs.

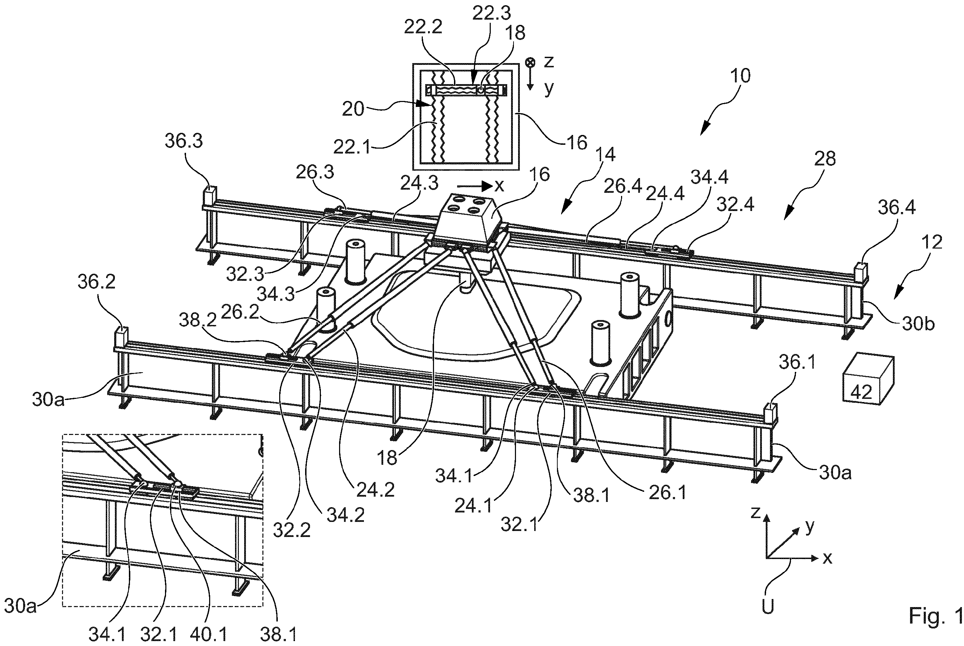

Figur 1 zeigt eine erfindungsgemäße Werkzeugmaschine 10, die einen Maschinenrahmen 12, einen Multipod-Antrieb 14 sowie ein Werkzeugkopfgestell 16 aufweist.

Am Werkzeugkopfgestell 16 ist ein Werkzeugkopf 18 mittels einer Achseneinheit 20 befestigt. Die Achseneinheit 20 ist schematisch als Teilbild gezeigt.

Die Achseneinheit 20 umfasst im vorliegenden Fall drei Antriebsachsen 22.1, 22.2, 22.3, mittels derer der Werkzeugkopf 18 in drei Raumrichtungen positioniert werden kann. Im vorliegenden Fall ist der Werkzeugkopf ein Fräskopf, der ein schematisch eingezeichnetes Werkzeug 19 in Form eines Fräsers hält.

Der Multipod-Antrieb 14 besitzt vier Antriebselemente 24.1, 24.2, 24.3, 24.4, mittels derer das Werkzeugkopfgestell 16 in den drei Raumrichtungen positioniert werden kann.

Der Multipod-Antrieb 14 umfasst zudem vier Stützelemente 26.1, 26.2, 26.3, 26.4. Da vier Antriebselemente existieren, ist der Multipod-Antrieb 14 durch die vier Stützelemente mehrfach mechanisch überbestimmt. In anderen Worten müssten alle vier Stützelemente 26 entfernt werden, damit der Multipod-Antrieb 14 nicht mehr mechanisch überbestimmt ist.

Der Multipod-Antrieb 14 ist zusammen mit dem Maschinenrahmen 12 Teil einer Bewegungseinrichtung 28. Die Bewegungseinrichtung 28 besitzt eine erste Schiene 30a und eine zweite Schiene 30b. Die Bewegungseinrichtung 28 umfasst zudem vier Schlitten 32.i (i=1, 2, 3, 4). Ein erster Schlitten 32.1 und ein zweiter Schlitten 32.2 sind an der ersten Schiene 30a geführt. Ein dritter Schlitten 32.3 und ein vierter Schlitten 32.4 sind an der zweiten Schiene 30b geführt. An jedem Schlitten 32.i ist ein Antriebselement-Fußpunkt 34.1 jeweils eines der Antriebselemente 24.i, im vorliegenden Fall mittels jeweils eines Kugelgelenks, befestigt. Jeder Schlitten 32.i ist mittels eines Antriebselement-Antriebs 36.i bewegbar. Bei den Antriebselementen 36.1 handelt es sich im vorliegenden Fall um Kugelgewindetriebe, die jeweils eine Gewindestange aufweisen, an der der jeweilige Schlitten 32.i läuft.

Der Multipod-Antrieb 14 umfasst Hilfs-Schienen 38.i, die am jeweiligen Schlitten 32.i linear geführt befestigt sind. An jeder Hilfs-Schiene 38.i ist ein Stützelement-Fußpunkt 40.i befestigt. Da ist besonders gut im Teilausschnitt unten links zu erkennen.

Jede Hilfs-Schiene 38 besitzt eine Stützelement-Arretiervorrichtung, mittels der eine Bewegung des jeweiligen Hilfs-Schlittens 38.i relativ zum entsprechenden Schlitten 32.i unterbindbar ist. Es ist möglich, in der Regel aber nicht notwendig, dass die Hilfs-Schlitten 38.i mittels eines Stützelement-Antriebs 36 bewegbar sind.

Die Werkzeugmaschine 10 umfasst eine schematisch eingezeichnete Steuerung 42, die mit allen Antrieben zum Ansteuern verbunden ist.

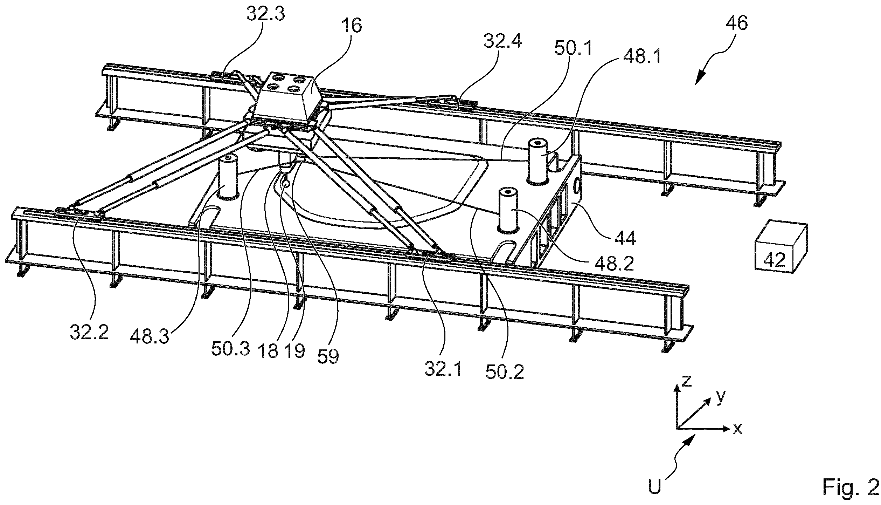

Figur 2 zeigt die Werkzeugmaschine 10, bei der die Schlitten 32.i ihre Position gewechselt haben. Dadurch hat sich das Werkzeugkopfgestell 16 relativ zu einem Werkstück 44 verschoben.

Figur 2 zeigt zudem, dass die Werkzeugmaschine 10 eine Messvorrichtung 46 aufweist, die im vorliegenden Fall drei Lasertracker 48.1, 48.2, 48.3 aufweist. Die Lasertracker 48.j (j = 1, 2, 3) peilen mit einem jeweiligen Laserstrahl 50.j einen Retroreflektor 52 an, der am Werkzeugkopf 18 befestigt ist. Dadurch ist die Position des Werkzeugkopfs 18 zu jedem Zeitpunkt mit hoher Genauigkeit bezüglich eines Maschinen-Koordinatensystems K bekannt.

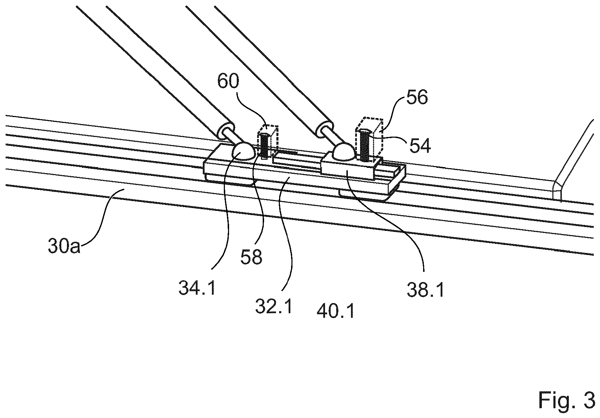

Zum Bearbeiten mit einer geringeren Präzision steuert die Steuerung 42 die Antriebselement-Antriebe 36.i an, sodass sich der Werkzeugkopf 18 auf einer vorgegebenen Minderpräzisions-Trajektorie T_{M} bewegt. Es kann sich dabei beispielswiese um einen Auftragsschweißprozess handeln, in diesem Fall ist der Werkzeugkopf 18 ein Auftragsschweißkopf. Soll der Werkzeugkopf 18 mit einer hohen Positioniergenauigkeit bewegt werden oder ist eine hohe Steifigkeit notwendig, so wird das Werkzeugkopfgestell 16 dadurch vorpositioniert, dass die Antriebselement-Antriebe 36.i entsprechend angesteuert werden. Nachfolgend werden die Stützelemente 26.i mittels einer Stützelement-Arretiervorrichtung 54 (Figur 3) arretiert.

Beispielsweise handelt es sich dabei um eine Klemmvorrichtung, die beispielswiese hydraulisch, pneumatisch oder mechanisch klemmend ausgebildet sein kann. Figur 3 zeigt, dass die Stützelement-Arretiervorrichtung 54 als Schraube ausgebildet sein kann, mittels dem der jeweilige Hilfs-Schlitten 38.i relativ zum entsprechenden Schlitten 32.i festgelegt wird. Die Stützelement-Arretiervorrichtung 54 kann, wie im Fall der Schraube, von Hand arretiert werden. Alternativ kann die Stützelement-Arretiervorrichtung 54 auch von einem schematisch gestrichelt eingezeichneten Motor 56 angetrieben sein.

Nachfolgend wird zumindest ein Antriebselement-Antrieb 36, insbesondere werden alle Antriebselement-Antriebe 36.i so bewegt, dass sie eine Spannung auf die Stützelemente 26.i aufbringen. Danach werden die Antriebselemente 24.i mittels einer Antriebselement-Arretiervorrichtung 58 arretiert. Diese Antriebselement-Arretiervorrichtung 58 ist beispielsweise durch die Antriebselement-Antriebe 36 gebildet oder ein Teil von ihnen. Beispielsweise können die Antriebselement-Antriebe 36 selbsthemmende Antriebe sein, beispielsweise Kugelgewindetriebe.

Figur 3b zeigt beispielhaft eine alternative Antriebselement-Arretiervorrichtung 58 in Form einer Schraube, mittels der der Schlitten 32.1 gegen die Schiene 30a verspannt wird. Die Antriebselement-Arretiervorrichtung 58 kann, wie im Fall der Schraube, von Hand arretiert werden. Alternativ kann die Antriebselement -Arretiervorrichtung 58 auch von einem schematisch gestrichelt eingezeichneten Motor 60 angetrieben sein. Oben sind weitere Ausführungsmöglichkeiten für die Stützelement-Arretiervorrichtung 54 und die Antriebselement-Arretiervorrichtung 58 beschrieben.

Das erhöht die Steifigkeit, da das Werkzeugkopfgestell 16 relativ zum Maschinenrahmen 12 angeordnet ist. In anderen Worten führt eine vorgegebene Kraft auf den Werkzeugkopf 18 zu einer geringeren Auslenkung als in dem Fall, in dem die Stützelement nicht arretiert und verspann sind.

Danach wird mittels der Messvorrichtung 46 mit hoher Genauigkeit die Position des Werkzeugkopfs 18 bestimmt. Nachfolgend wird in eine Hochpräzisions-Trajektorie T_{H}, entlang der sich der Werkzeugkopf bewegen soll und die im Koordinatensystem K des Werkzeugs angegeben ist, auf ein Maschinenkoordinatensystem umgerechnet. Auf Basis der so erhaltenen Trajektorie wird die Achseneinheit 20 angesteuert, sodass der Werkzeugkopf 18 die vorgegebene Trajektorie abfährt.

**Bezugszeichenliste**

| | | | |
|---|---|---|---|
| 10 | Werkzeugmaschine | i | Laufindex |
| 12 | Maschinenrahmen | j | Laufindex |
| 14 | Multipod-Antrieb | T_{M} | Minderpräzisions-Trajektorie |
| 16 | Werkzeugkopfgestell | T_{H} | Hochpräzisions-Trajektorie |
| 18 | Werkzeugkopf | | |
| 19 | Werkzeug | | |
| 20 | Antriebseinheit | | |
| 22 | Antriebsachse | | |
| 24 | Antriebselement | | |
| 26 | Stützelement | | |
| 28 | Bewegungseinrichtung | | |
| 30 | Schiene | | |
| 32 | Schlitten | | |
| 34 | Antriebselement-Fußpunkt | | |
| 36 | Antriebselement-Antrieb | | |
| 38 | Hilfs-Schlitten | | |
| 40 | Stützelement-Fußpunkt | | |
| 42 | Steuerung | | |
| 44 | Werkstück | | |
| 46 | Messvorrichtung | | |
| 48 | Lasertracker | | |
| 50 | Laserstrahl | | |
| 52 | Retroreflektor | | |
| 54 | Stützelement-Arretiervorrichtung | | |
| 56 | Motor | | |

## Patentansprüche

1. Werkzeugmaschine (10) mit
(a) einem Werkzeugkopfgestell (16),
(b) einem Werkzeugkopf (18),
(c) einer Achseneinheit (20), die am Werkzeugkopfgestell (16) befestigt ist und mittels der der Werkzeugkopf (18) auf eine vorgebbare Position positionierbar ist, und
(d) einer Bewegungseinrichtung (28) zum Bewegen des Werkzeugkopfgestells (16),
**dadurch gekennzeichnet, dass**
die Bewegungseinrichtung (28)
(e) einen Maschinenrahmen (12) und
(f) einen Multipod-Antrieb (14), der
(i) zumindest drei Antriebselemente (24) aufweist,
(ii) im Kraftfluss zwischen dem Maschinenrahmen (12) und dem Werkzeugkopfgestell (16) angeordnet ist und
(iii) zumindest zwei Stützelemente (26) aufweist, die in einen arretierten Zustand bringbar sind,
(iv) wobei der Multipod-Antrieb (14) durch die Stützelemente (26) und die Antriebselemente (24) zumindest zweifach mechanisch überbestimmt ist,
hat.

2. Werkzeugmaschine nach Anspruch 1, **dadurch gekennzeichnet, dass** der Multipod-Antrieb (14) zum Bewegen des Werkzeugkopfgestells (16) in genau drei, genau vier oder genau fünf Freiheitsgraden ausgebildet ist.

3. Werkzeugmaschine nach einem der vorstehenden Ansprüche, **dadurch gekennzeichnet, dass**
(a) der Multipod-Antrieb (14) zumindest vier, insbesondere genau vier, Stützelemente (26) aufweist, und
(b) das Werkzeugkopfgestell (16) relativ zum Maschinenrahmen (12) unbeweglich ist, wenn die Stützelemente (26) jeweils im arretierten Zustand sind.

4. Werkzeugmaschine nach Anspruch 3, **gekennzeichnet durch**
(a) eine Antriebselement-Arretiervorrichtung (58) zum Arretieren der Antriebselemente (24) relativ zum Maschinenrahmen (12) und/oder
(b) eine Stützelement-Arretiervorrichtung (54) zum Arretieren der Stützelemente (26) relativ zum Maschinenrahmen (12).

5. Werkzeugmaschine nach einem der vorstehenden Ansprüche, **dadurch gekennzeichnet, dass**
(a) die Antriebselemente (24) jeweils einen Antriebselement-Antrieb (36) zum Bewegen der Antriebselemente (24) aufweisen und/oder
(b) die Stützelemente (26) jeweils einen Stützelement-Antrieb zum Bewegen der Stützelemente (26) aufweisen.

6. Werkzeugmaschine nach einem der vorstehenden Ansprüche, **dadurch gekennzeichnet, dass**
(a) die Bewegungseinrichtung (28)
- eine erste Schiene (30.1),
- einen ersten Schlitten (32.1), der an der ersten Schiene (30.1) geführt ist, und
- zumindest einen zweiten Schlitten (32.2), der an der ersten Schiene (30.1) geführt ist, aufweist,
(b) ein erster Antriebselement-Fußpunkt (34.1) des ersten Antriebselements (34.1) am ersten Schlitten (32.1) befestigt ist,
(c) ein zweiter Antriebselement-Fußpunkt (34.2) des zweiten Antriebselements (24.2) am zweiten Schlitten (32.2) befestigt ist,
(d) der erste Antriebselement-Antrieb (36.1) zum Bewegen des ersten Schlittens (32.1) entlang der ersten Schiene (30.1) ausgebildet ist und
(e) der zweite Antriebselement-Antrieb (36) zum Bewegen des zweiten Schlittens (32.2) entlang der ersten Schiene (30.1) ausgebildet ist.

7. Werkzeugmaschine nach Anspruch 6, **dadurch gekennzeichnet, dass**
(f) der Multipod-Antrieb (14) einen ersten Hilfs-Schlitten (38), der an dem ersten Schlitten (32.1) linear geführt ist, aufweist, und
(g) ein erster Stützelement-Fußpunkt (40.1) des ersten Stützelements (26.1) am ersten Hilfs-Schlitten (38.1) befestigt ist.

8. Werkzeugmaschine nach Anspruch 7, **dadurch gekennzeichnet, dass**
(h) die Stützelement-Arretiervorrichtung (54) eingerichtet ist zum Festlegen des ersten Hilfs-Schlittens (38.1) relativ zur ersten Hilfs-Schiene.

9. Werkzeugmaschine nach einem der Ansprüche 5 bis 8, **gekennzeichnet durch** eine Steuerung (42), die ausgebildet ist zum automatischen Durchführen eines Verfahrens mit den Schritten:
(i) Ansteuern der Antriebselement-Antriebe (36), sodass sich der Werkzeugkopf (18) entlang einer vorgegebenen Minderpräzisions-Trajektorie (T_{M}) bewegt, und
(ii) Ansteuern
des Werkzeugkopfs (18) oder eines ersten Werkzeugs (19), das am Werkzeugkopf (18) befestigt ist,
sodass es ein Werkstück (44) bearbeitet, wobei die Achseneinheit (20) nicht bewegt wird,
(iii) danach Ansteuern der Arretiervorrichtungen (54, 58), sodass diese die Antriebselemente (24) und die Stützelemente (26) arretieren, und
(iv) Ansteuern der Achseneinheit (20), sodass
der Werkzeugkopf oder
das erste Werkzeug (19) oder
ein zweites Werkzeug, das am Werkzeugkopf (18) befestigt ist, entlang einer vorgegebenen Hochpräzisions-Trajektorie (T_{H}) bewegt wird.

10. Werkzeugmaschine nach Anspruch 9, **dadurch gekennzeichnet, dass** die Steuerung (42) ausgebildet ist zum automatischen Durchführen eines Verfahrens mit dem Schritt:
nach dem Ansteuern der Arretiervorrichtungen (54, 58), sodass diese die Antriebselemente (24) und die Stützelemente (26) arretieren,
Ansteuern zumindest eines Teils der, insbesondere aller, Antriebselement-Antriebe (36), sodass sich die Antriebselemente (24) gegen die Stützelemente (26) verspannen.

11. Werkzeugmaschine nach Anspruch 9, **gekennzeichnet durch**
(a) eine Messvorrichtung (46), die
- ausgebildet ist zum automatischen Aufspannen eines metrologischen Rahmens und
- mittels der die Position des Werkzeugkopfs (18) relativ zur Messvorrichtung (46) bestimmbar ist,
(b) wobei die Steuerung (42) eingerichtet ist zum automatischen Durchführen eines Verfahrens mit den Schritten:
(α) nach Schritt (iii) Messen einer Position des Maschinenrahmens (12) relativ zur Messvorrichtung (46),
(β) Errechnen der Hochpräzisions-Trajektorie (T_{H}) im Maschinen-Koordinatensystem aus einer vorgegebenen Ziel-Trajektorie in Messrahmen-Koordinaten der Messvorrichtung (46) und
(χ) Bewegen des Werkzeugkopfs (18) oder des Werkzeugs (19) entlang der Hochpräzisions-Trajektorie (T_{H}) mittels der Achseneinheit (20), so dass das Werkstück (44) bearbeitet wird.

12. Werkzeugmaschine nach Anspruch 11, **dadurch gekennzeichnet, dass** die Messvorrichtung (46) einen Lasertracker (48) aufweist.

13. Bearbeitungsensemble aus
- einer Werkzeugmaschine (10) nach einem der vorstehenden Ansprüche und
- einem Werkstück (44), wobei
- das Werkstück (44) relativ zu der ersten Schiene (30.1) fixiert ist.

## Claims

1. A machine tool (10) with
(a) a tool head frame (16),
(b) a tool head (18),
(c) an axis unit (20) that is fixed to the tool head frame (16) and by means of which the tool head (18) can be positioned in a predefinable position, and
(d) a movement device (28) for moving the tool head frame (16),
**characterised in that**
the movement device (28) comprises
(e) a machine frame (12) and
(f) a multipod drive (14) which has
(i) at least three drive elements (24),
(ii) is arranged in the flux of force between the machine frame (13) and the tool head frame (16), and
(iii) comprises at least two supporting elements (26), which can be brought into a locked state,
(iv) wherein the multipod drive (14) is mechanically overdetermined at least twice by the supporting elements (26) and the drive elements (24).

2. The machine tool according to claim 1, **characterised in that** the multipod drive (14) is designed to move the tool head frame (16) in exactly three, exactly four or exactly five degrees of freedom.

3. The machine tool (10) according to one of the preceding claims, **characterized in that**
(a) the multipod drive (14) has at least four, in particular exactly four, supporting elements (26), and
(b) the tool head frame (16) cannot be moved relative to the machine frame (12) when the supporting elements (26) are in the locked state.

4. The machine tool (10) according to claim 3, **characterised by**
(a) a drive element locking device (58) for locking the drive elements (24) relative to the machine frame (12) and/or
(b) a supporting element locking device (54) for locking the supporting elements (26) relative to the machine frame (12).

5. The machine tool (10) according to one of the preceding claims, **characterised in that**
(a) the drive elements (24) each feature a drive element drive (36) for moving the drive elements (24) and/or
(b) the supporting elements (26) each feature a supporting element drive (36) for moving the supporting elements (26).

6. The machine tool (10) according to one of the preceding claims, **characterised in that**
(a) the movement device (28) comprises
- a first rail (30.1),
- a first slide (32.1) which is guided on the first rail (30.1), and
- at least a second slide (32.2) which is guided on the first rail (30.1),
(b) a first drive element base point (34.1) of the first drive element (34.1) is fixed to the first slide (32.1),
(c) a second drive element base point (34.2) of the second drive element (24.2) is fixed to the second slide (32.2),
(d) the first drive element drive (36.1) is designed to move the first slide (32.1) along the first rail (30.1) and
(e) the second drive element drive (36) is designed to move the second slide (32.2) along the first rail (30.1).

7. The machine tool according to claim 6, **characterised in that**
(f) the multipod drive (14) comprises a first auxiliary slide (38) which is linearly guided on the first slide (32.1), and
(g) a first supporting element base point (40.1) of the first supporting element (26.1) is fixed to the auxiliary first slide (38.1).

8. The machine tool according to claim 7, **characterised in that** (h) the supporting element locking device (54) is configured to fix the first auxiliary slide (38.1) relative to the first auxiliary rail.

9. The machine tool (10) according to one of the claims 5 to 8, **characterised by** a control system (42) that is designed to automatically carry out a method featuring the steps:
(i) driving the drive element drives (36) so that the tool head (18) moves along a predefined low precision trajectory (T_{M}), and
(ii) driving
the tool head (18) or a first tool (19) that is fixed to the tool head (18), so that it machines a workpiece (44), without moving the axis unit (20),
(iii) then driving the locking devices (54, 58) so that they lock the drive elements (24) and the supporting elements (26), and
(iv) driving the axis unit (20) so that
the tool head or
the first tool (19) or
a second tool, which is fixed to the tool head (18), is moved along a predefined high precision trajectory (T_{H}).

10. The machine tool (10) according to claim9, **characterised in that** the machine control system (42) is configured to automatically carry out a method containing the steps:
after driving the locking devices (54, 58) so that they lock the drive elements (24) and the supporting elements (26),
driving at least a part, in particular all, of the drive element drives (36) so that the drive elements (24) are braced against the supporting elements (26) .

11. The machine tool (10) according to claim 9, **characterised by**
(a) a measuring device (46), which
- is designed to automatically set out a metrological frame and
- by means of which the position of the tool head (18) relative to the measuring device (46) can be determined,
(b) wherein the control system (42) is configured to automatically carry out a method featuring the steps:
(α) after step (iii), measuring a position of the machine frame (12) relative to the measuring device (46),
(β) calculating the high precision trajectory (T_{H}) in the machine coordinate system from a predetermined target trajectory in measuring frame coordinates of the measurement device (46), and
(χ) moving the tool head (18) or the tool (19) along the high precision trajectory (TH) by means of the axis unit (20) so that the workpiece (44) is machined.

12. The machine tool according to claim 11, **characterised in that** the measuring device (46) features a laser tracker (48).

13. A machining assembly composed of
- a machine tool (10) according to one of the preceding claims and
- a workpiece (44), wherein
- the workpiece (44) is fixed relative to the first rail (30.1).

## Revendications

1. Machine-outil (10) comprenant
(a) un bâti de tête d'outil (16),
(b) une tête d'outil (18),
(c) une unité d'axes (20) fixée au bâti de tête d'outil (16) et permettant de positionner la tête d'outil (18) à une position prédéfinissable, et
(d) un dispositif de déplacement (28) pour déplacer le bâti de tête d'outil (16),
**caractérisée en ce que**
le dispositif de déplacement (28) comprend
(e) un châssis de machine (12) et
(f) un entraînement multipode (14) qui
(i) comprend au moins trois éléments d'entraînement (24),
(ii) est disposé dans le flux de force entre le châssis de machine (12) et le bâti de tête d'outil (16) et
(iii) comprend au moins deux éléments de soutien (26) qui peuvent être amenés dans un état bloqué,
(iv) l'entraînement multipode (14) étant mécaniquement surdéterminé au moins deux fois par les éléments de soutien (26) et par les éléments d'entraînement (24).

2. Machine-outil selon la revendication 1,
**caractérisée en ce que** l'entraînement multipode (14) est réalisé pour déplacer le bâti de tête d'outil (16) dans exactement trois, exactement quatre ou exactement cinq degrés de liberté.

3. Machine-outil selon l'une des revendications précédentes,
**caractérisée en ce que**
(a) l'entraînement multipode (14) présente au moins quatre, en particulier exactement quatre, éléments de soutien (26), et
(b) le bâti de tête d'outil (16) est immobile par rapport au châssis de machine (12) lorsque les éléments de soutien (26) sont chacun dans l'état bloqué.

4. Machine-outil selon la revendication 3, **caractérisée par**
(a) un dispositif de blocage d'éléments d'entraînement (58) pour bloquer les éléments d'entraînement (24) par rapport au châssis de machine (12), et/ou
(b) un dispositif de blocage d'éléments de soutien (54) pour bloquer les éléments de soutien (26) par rapport au châssis de machine (12).

5. Machine-outil selon l'une des revendications précédentes,
**caractérisée en ce que**
(a) les éléments d'entraînement (24) présentent chacun un entraînement d'éléments d'entraînement (36) pour déplacer les éléments d'entraînement (24), et/ou
(b) les éléments de soutien (26) présentent chacun un entraînement d'éléments de soutien pour déplacer les éléments de soutien (26).

6. Machine-outil selon l'une des revendications précédentes,
**caractérisée en ce que**
(a) le dispositif de déplacement (28) comprend
- un premier rail (30.1),
- un premier chariot (32.1) qui est guidé sur le premier rail (30.1), et
- au moins un deuxième chariot (32.2) qui est guidé sur le premier rail (30.1),
(b) une première base d'élément d'entraînement (34.1) du premier élément d'entraînement (34.1) est fixée au premier chariot (32.1),
(c) une deuxième base d'élément d'entraînement (34.2) du deuxième élément d'entraînement (24.2) est fixée au deuxième chariot (32.2),
(d) le premier entraînement d'éléments d'entraînement (36.1) est réalisé pour déplacer le premier chariot (32.1) le long du premier rail (30.1), et
(e) le deuxième entraînement d'éléments d'entraînement (36) est réalisé pour déplacer le deuxième chariot (32.2) le long du premier rail (30.1).

7. Machine-outil selon la revendication 6,
**caractérisée en ce que**
(f) l'entraînement multipode (14)
comprend un premier chariot auxiliaire (38) qui est guidé linéairement sur le premier chariot (32.1), et
(g) une première base d'élément de soutien (40.1) du premier élément de soutien (26.1) est fixée au premier chariot auxiliaire (38.1).

8. Machine-outil selon la revendication 7,
**caractérisée en ce que**
(h) le dispositif de blocage d'élément de soutien (54) est conçu pour immobiliser le premier chariot auxiliaire (38.1) par rapport au premier rail auxiliaire.

9. Machine-outil selon l'une des revendications 5 à 8,
**caractérisée par** une commande (42) réalisée pour mettre en œuvre automatiquement un procédé comprenant les étapes consistant à :
(i) piloter les entraînements d'éléments d'entraînement (36) de telle sorte que la tête d'outil (18) se déplace le long d'une trajectoire de moindre précision (T_{M}) prédéterminée, et
(ii) piloter la tête d'outil (18) ou un premier outil (19) fixé à la tête d'outil (18), de manière à usiner une pièce à usiner (44), l'unité d'axes (20) n'étant pas déplacée,
(iii) puis, piloter les dispositifs de blocage (54, 58) de manière à bloquer les éléments d'entraînement (24) et les éléments de soutien (26), et
(iv) piloter l'unité d'axes (20) de sorte que
la tête d'outil ou
le premier outil (19) ou
un deuxième outil fixé à la tête d'outil (18)
est déplacé(e) le long d'une trajectoire de haute précision (T_{H}) prédéterminée.

10. Machine-outil selon la revendication 9,
**caractérisée en ce que** la commande (42) est réalisée pour mettre en œuvre automatiquement un procédé comprenant l'étape consistant à :
après avoir piloté les dispositifs de blocage (54, 58) de manière à bloquer les éléments d'entraînement (24) et les éléments de soutien (26),
piloter au moins une partie des entraînements d'éléments d'entraînement (36), en particulier tous les entraînements, de sorte que les éléments d'entraînement (24) se serrent contre les éléments de soutien (26).

11. Machine-outil selon la revendication 9, **caractérisée par**
(a) un dispositif de mesure (46) qui
- est réalisé pour créer automatiquement un cadre métrologique et
- permet de déterminer la position de la tête d'outil (18) par rapport au dispositif de mesure (46),
(b) la commande (42) étant conçue pour mettre en œuvre automatiquement un procédé comprenant les étapes consistant à :
(α) après l'étape (iii), mesurer une position du châssis de machine (12) par rapport au dispositif de mesure (46),
(β) calculer la trajectoire de haute précision (T_{H}) dans le système de coordonnées de la machine à partir d'une trajectoire cible prédéterminée, en coordonnées de cadre métrologique du dispositif de mesure (46) ; et
(χ) déplacer la tête d'outil (18) ou l'outil (19) le long de la trajectoire de haute précision (T_{H}) au moyen de l'unité d'axes (20), de manière à usiner la pièce à usiner (44).

12. Machine-outil selon la revendication 11,
**caractérisée en ce que** le dispositif de mesure (46) comprend un laser tracker (48).

13. Ensemble d'usinage constitué par
- une machine-outil (10) selon l'une des revendications précédentes et
- une pièce à usiner (44),
- la pièce à usiner (44) étant fixée par rapport au premier rail (30.1).
